# EUROPEAN PATENT APPLICATION

(11) **EP 2 439 917 A1**
(43) Date of publication of application: **11.04.2012**
(21) Application number: 09845439.0
(22) Date of filing: 27.11.2009
(51) Int. Cl.: H04M 3/42

(54) **COLORFUL RING SYSTEM AND COLORFUL RING SERVICE REALIZING METHOD**

(30) Priority: 04.06.2009 CN 200910203283
(71) Applicant: ZTE Corporation, Shenzhen, Guangdong 518057 (CN)
(72) Inventor: LI, Liangsheng, Shenzhen Guangdong 518057 (CN)
(74) Representative: Wilson Gunn
(86) International application number: PCT/CN2009/075183
(87) International publication number: WO 2010/139159

(57) **Abstract**

The present invention provides a color ring back tone system, the system supports the group coloring ring service, and comprises a color ring back tone operating platform and a color ring back tone system platform which are connected with each other, wherein the color ring back tone operating platform is realized at the user side, and is used to realize group color ring back tone information interaction between the user and the color ring back tone system platform, which comprises: sending a group color ring back tone opening request to the color ring back tone system platform; the color ring back tone system platform is realized at the system side, and is used to process the group color ring back tone information sent by the user, which comprises: opening the group color ring back tone according to the opening request, and defaulting the user which requests to open group color ring back tone as the group color ring back tone administrator; directly open a common color ring back tone and a group color ring back tone if the user which requests to be a member of the group color ring back tone does not open the common color ring back tone. The group color ring back tone service provided by the color ring back tone system platform, color ring back tone system and the method for realizing color ring back tone service according to the present invention is the powerful complement to the existing color ring back tone service, and can make the color ring back tone service more convenient and humanized.

## Description

### TECHNICAL FIELD

The present invention relates to Color Ring Back Tone (CRBT) service, in particular to a color ring back tone system and a method for realizing color ring back tone service.

### BACKGROUND

'Color ring back tone', which is a kind of personalized ring-back tone service, is a service customized by the called user and providing a piece of melody or a greeting for the calling user to replace a common ring-back tone. After a user opens the color ring back tone service, another user which calls the mobile phone of the user and waits for connection, can hear music or sound and the like set by the called user rather than the dull ring-back tone 'beep'. As the content of color ring back tone is enriched day by day, the color ring back tone service becomes popular with more and more users. However, for the traditional color ring back tone service products, the ringtone ordered by a user can only be used by itself instead of others. As mobile phones get more and more popular, many children and old persons also become potential users of the color ring back tone service, but in view of the limitation of cognizance or ability of the users, the users can not freely grasp the method of opening and canceling of the color ring back tone service, especially the method of changing the color ring back tone, so that certain unnecessary trouble and annoyance are brought to the users.

### SUMMARY

The present invention aims to solve the technical problem of providing a color ring back tone system and a method for realizing color ring back tone service, so as to make the color ring back tone service more convenient and more humanized.

In order to solve the technical problem above, the present invention provides a color ring back tone system, the system supports group color ring back tone service, and comprises a color ring back tone operating platform and a color ring back tone system platform which are connected with each other, wherein
the color ring back tone operating platform is realized at the user side, and is arranged to realize group color ring back tone information interaction between a user and the color ring back tone system platform, which comprises: sending a group color ring back tone opening request to the color ring back tone system platform;
the color ring back tone system platform is realized at the system side, and is arranged to process the group color ring back tone information sent by the user, which comprises: opening a group color ring back tone according to the opening request, and defaulting the user which requests to open the group color ring back tone as a group color ring back tone administrator; directly opening a common color ring back tone and the group color ring back tone when the user which requests to be a member of the group color ring back tone does not open the common color ring back tone.

Further, the color ring back tone system platform may comprise a transceiver unit and a processing unit which are connected with each other, wherein
the color ring back tone system platform is realizing at the system side;
the transceiver unit is arranged to receive information sent by the user through the color ring back tone operating platform and send processing result information of the processing unit to the color ring back tone operating platform so as to notify the user of the processing result;
the processing unit further comprises a group color ring back tone opening management module, a color ring back tone mode identification module and a color ring back tone database, wherein
the group color ring back tone opening management module is arranged to process the group color ring back tone opening request, which comprises: notifying the color ring back tone mode identification module to identify the color ring back tone mode of the user to be processed and processing opening of the group color ring back tone according to an identification result of the color ring back tone mode identification module: if the user does not open the color ring back tone, then opening the common color ring back tone, creating an initialization record of the group color ring back tone in the color ring back tone database, and defaulting the user which requests to open the group color ring back tone as the group color ring back tone administrator; if the user has opened the common color ring back tone, then directly creating an initialization record of the group color ring back tone in the color ring back tone database, and default the user which requests to open the group color ring back tone as the group color ring back tone administrator; if the group color ring back tone has been opened, then confirming that the group color ring back tone is opened unsuccessfully;
the color ring back tone mode identification module is arranged to inquire the color ring back tone database so as to identify the color ring back tone mode of the user to be processed and notify the group color ring back tone opening module.

Further, the processing unit may further comprise a group color ring back tone member management module, which is arranged to process requests of adding and deleting of a group color ring back tone member which are proposed by the user; notify, when a member is added, the color ring back tone mode identification module to identify the color ring back tone mode of the user to be processed, and process adding of the group color ring back tone member according to an identification result of the color ring back tone mode identification module; open the common color ring back tone if the user does not open the color ring back tone, and add a member record in a group color ring back tone record of the color ring back tone database; directly add the member record in the group color ring back tone record of the color ring back tone database if the user has opened the common color ring back tone; consider group color ring back tone member management as a failure if the group color ring back tone has been opened;
when the users is the group color ring back tone administrator, the group color ring back tone member management module may be further arranged to send a confirmation request to an invited user; and after the confirmation of the invited user, the group color ring back tone member management module notifies the color ring back tone mode identification module to identify the color ring back tone mode;
when the user is not the member of the group color ring back tone, the group color ring back tone member management module may be further arranged to send a confirmation request to the group color ring back tone administrator; and after the confirmation of the group color ring back tone administrator, the group color ring back tone member management module notifies the color ring back tone mode identification module to identify the color ring back tone mode.

Further, the color ring back tone operating platform may be provided by a mobile terminal, a WEB interface or an Interactive Voice Response system (IVR), and may interact with the color ring back tone system platform through the manner of a Short Messaging Service (SMS), a WEB or an IVR.

In order to solve the technical problem above, the present invention further provides a method for realizing color ring back tone service, which is realized on the basis of the color ring back tone system. The process of opening a group color ring back tone comprises:
sending, by a user, a group color ring back tone opening application through a color ring back tone operating platform;
receiving the application by a color ring back tone system platform and determining whether the user has opened a common color ring back tone, if not, opening the common color ring back tone, and creating an initialization record of the group color ring back tone, and defaulting the user which requests to open the group color ring back tone as a group color ring back tone administrator;
notifying, by the color ring back tone system platform, the user that the group color ring back tone is opened successfully through the color ring back tone operating platform.

Further, the process that the group color ring back tone administrator invites other users to join the group color ring back tone may comprise:
sending, by the group color ring back tone administrator, a request to the color ring back tone system platform through the color ring back tone operating platform so as to invite other users to join the opened group color ring back tone;
receiving the request by the color ring back tone system platform, and sending to the user a confirmation request of joining the group color ring back tone, and determining whether the user has opened the common color ring back tone after the user confirms to join the group color ring back tone, if not, opening the common color ring back tone, and adding the user, as a member of the group color ring back tone, in a group color ring back tone record.

Further, the process that the user which is a non group color ring back tone member requests to join the group color ring back tone comprises:
applying to the color ring back tone system platform, by a non group color ring back tone member, for joining the group color ring back tone through the color ring back tone operating platform;
sending, by the color ring back tone system platform, a confirmation request to the group color ring back tone administrator;
sending, by the group color ring back tone administrator, confirmation information to the color ring back tone system platform;
receiving the confirmation information by the color ring back tone system platform, and determining whether the user has opened the common color ring back tone, if not, then opening the common color ring back tone, and adding the user, as a member of the group color ring back tone, in the group color ring back tone record.

Further, the color ring back tone operating platform may interact with the color ring back tone system platform through an SMS, a WEB interface or an IVR, and the color ring back tone operating platform may be realized on a mobile terminal or the WEB.

In order to solve the technical problem above, the present invention further provides a color ring back tone system platform; the color ring back tone system platform supports the group color ring back tone service and is arranged to process group color ring back tone information sent by the user, which comprises: opening the group color ring back tone according to a opening request, and defaulting the user which requests to open group color ring back tone as a group color ring back tone administrator; and directly opening a common color ring back tone and the group color ring back tone when the user which requests to be a member of the group color ring back tone does not open the common color ring back tone.

Further, the user may interact with the color ring back tone system platform through the manner of the SMS, the WEB or the IVR.

Compared with the prior art, the group color ring back tone service realized by the color ring back tone system platform, the color ring back tone system and the group color ring back tone service according to the present invention is the complement to the existing color ring back tone service, thus making the color ring back tone system more convenient to users, and more humanized. By adopting the group color ring back tone opening technology of the present invention, either color ring back tone users or non color ring back tone users can join the group color ring back tone through various manners, such as the SMS and the like; and for the non color ring back tone users, color ring back tone and group color ring back tone can be opened without any letup, thereby providing great convenience for the users. Especially, children and old persons can join the group color ring back tone conveniently to experience beautiful melodies of the group color ring back tone.

### BRIEF DESCRIPTION OF THE DRAWINGS

Fig. 1 is a diagram illustrating the modular structure of a color ring back tone system in the present invention;
Fig. 2 is a flowchart illustrating the opening process of a group color ring back tone in the present invention;
Fig. 3 is a flowchart illustrating the opening process that a group administrator invites other users to join a group color ring back tone;
Fig. 4 is a flowchart illustrating the opening process that a user applies to join a group color ring back tone.

### DETAILED DESCRIPTION

The color ring back tone system and the method for realizing color ring back tone service according to the present invention mainly aim at the group color ring back tone. The group color ring back tone is formed by adding a new characteristic based on the traditional color ring back tone, specifically, the novel color ring back tone is **characterized in that**: a single user applies to open the group color ring back tone and is defaulted as the administrator of the 'group'; the group color ring back tone administrator is admitted to invite other members, order ringtones for the group, set the strategy of playing ringtones, and the like; other users can join the 'group' after getting the approval of the group color ring back tone administrator; and the members of the group share the ringtones and the ringtone setting of the group.

There is a mapping relation between the user of the present invention and a telephone number, namely, a binding relation, and the group color ring back tone administrator of the present invention also identifies its identity according to a telephone number.

The group of the present invention can be a family, a unit or a freely combined group in practical application, which is not limited by the present invention.

The color ring back tone system and the method for realizing color ring back tone service of the present invention will be explained below.

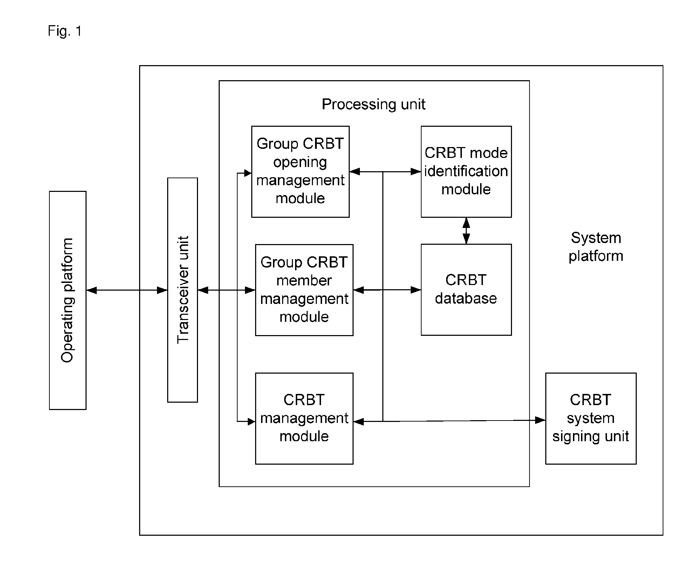

As shown in Fig. 1, the color ring back tone system of the present invention supports the group color ring back tone service and comprises a color ring back tone operating platform and a color ring back tone system platform which are connected with each other, wherein
the color ring back tone operating platform is realized at the user side and is used for realizing the group color ring back tone information interaction between the user and the color ring back tone system platform, which includes: sending a group color ring back tone opening or canceling request, a member adding or deleting request, a color ring back tone management request and the like to the color ring back tone system platform;
the color ring back tone operating platform is provided by a mobile terminal, a WEB interface or an IVR, and interacts with the color ring back tone system platform through manners of the SMS, the WEB or the IVR.

For the opening of the group color ring back tone, the WEB manner is a manner that is accepted by most netizens more easily, users open the group color ring back tone through specific websites disclosed by telecom operators; the short message manner is realized by sending short messages of group color ring back tone opening to specific group color ring back tone opening access numbers disclosed by telecom operators; and the IVR manner is that: users call specific access telephones disclosed by telecom operators, and perform operation according to voice prompts of the telephones so as to open the group color ring back tone.

The color ring back tone system platform is realized at the system side and is used for processing the group color ring back tone information sent from the color ring back tone operating platform, and comprises a transceiver unit, a processing unit and a color ring back tone system signing unit which are connected with each other, wherein
the transceiver unit is used for receiving the group color ring back tone information sent by a user through the color ring back tone operating platform, and sending processing result information of the processing unit to the color ring back tone operating platform so as to inform the user of the processing result;
the processing unit is used for processing related requests related to group color ring back tone (such as opening, canceling, member adding or deleting, joining or quitting and group color ring back tone order setting requests) sent from the color ring back tone operating platform and returning a confirmation request or processing result, and comprises a group color ring back tone opening management module, a group color ring back tone member management module and a color ring back tone management module that are all connected with the transceiver unit, and a color ring back tone mode identification module and a color ring back tone database which are connected with the group color ring back tone opening management module, the group color ring back tone member management module and the color ring back tone management module, wherein
the group color ring back tone opening management module is used for processing a group color ring back tone opening or canceling request; when processing a group color ring back tone opening request, comprising: notifying the color ring back tone mode identification module to identify the color ring back tone mode of the of the user to be processed and processing the group color ring back tone opening according to the identification result of the color ring back tone mode identification module: if the user does not open the color ring back tone, then opening the common color ring back tone, and creating an initialization record of the group color ring back tone in the color ring back tone database, and defaulting the user which requests to open the group color ring back tone as the group color ring back tone administrator; if the user has opened the common color ring back tone, then directly creating an initialization record of the group color ring back tone in the color ring back tone database, and defaulting the user which requests the opening the group color ring back tone as the group color ring back tone administrator; and if the group color ring back tone has been opened, then considering the opening of the group color ring back tone as a failure; and the group color ring back tone opening management module is further used for notifying the color ring back tone system signing unit to sign the color ring back tone information.

Each group color ring back tone must be provided with a group color ring back tone administrator which is an executor of important operations such as group color ring back tone member management, group ringtone order, group ringtone setting. Only if the group color ring back tone administrator opens the group color ring back tone successfully, can other users join the group color ring back tone through the group color ring back tone member management module.

The color ring back tone mode identification module is used for inquiring the color ring back tone database so as to identify the color ring back tone mode of the user to be processed and notifying the group color ring back tone opening module;
the group color ring back tone member management module is used for processing the requests of adding and deleting a group color ring back tone member which are proposed by the user; when adding a member, comprising: notifying the color ring back tone mode identification module to identify the color ring back tone mode of the user to be processed, and processing adding of the group color ring back tone member according to the identification result of the color ring back tone mode identification module: if the user does not open the color ring back tone, then opening the common color ring back tone, and adding a member record in the group color ring back tone record of the color ring back tone database; if the user has opened the common color ring back tone, then adding the member record directly in the group color ring back tone record of the color ring back tone database; if the user has opened the group color ring back tone, then considering the group color ring back tone member management as a failure; and the group color ring back tone member management module is further used for notifying the color ring back tone system signing unit to sign the color ring back tone information.

The group color ring back tone member management comprises adding and deleting of members; and adding of members can be realized through two ways, namely the user which makes an adding request is the group color ring back tone administrator or is not the member of the group color ring back tone:
when the user is the group color ring back tone administrator, the group color ring back tone member management module is further used for creating a pre-adding member record in the color ring back tone database and sending a confirmation request to an invited user; after the confirmation of the invited user, the group color ring back tone member management module notifies the color ring back tone mode identification module to identify the color ring back tone mode, and deletes the pre-adding member record after the group color ring back tone member of the color ring back tone database joins successfully;
when the user is not the member of the group color ring back tone, the group color ring back tone member management module is further used for creating a pre-adding member record in the color ring back tone database and sending a confirmation request to the group color ring back tone administrator; after the confirmation of the group color ring back tone administrator, the group color ring back tone member management module notifies the color ring back tone mode identification module to identify the color ring back tone mode, and deletes the pre-adding member record after the group color ring back tone member of the color ring back tone database joins successfully.

When the group color ring back tone member management module of the color ring back tone system platform sends confirmation requests to the invited user and the group color ring back tone administrator, and when the invited user and the group color ring back tone administrator feed back the confirmation results to the color ring back tone system platform, all the manners through which the invited user or the group color ring back tone administrator can be reached can be adopted, such as short messages, the WEB interface, or the IVR and the like, and the manner of the short message is recommended in the present invention.

It should be noted that the processes of group color ring back tone opening, member management and color ring back tone management, if the manner of the short message is adopted, are realized through a special access number set by the group color ring back tone system.

The color ring back tone management module is used for setting the group color ring back tone according to the request of the group color ring back tone administrator.

The color ring back tone database is used for recording the opening information, the member information and the color ring back tone information of the common color ring back tone as well as those of the group color ring back tone.

The system color ring back tone signing unit is realized on a switch or a soft switching system, and is connected with the group color ring back tone opening management module, the group color ring back tone member management module and the color ring back tone management module, and is used for signing color ring back tone information.

For the narrowband color ring back tone, the system color ring back tone signing unit is realized on a switch; for the wideband color ring back tone, the system color ring back tone signing unit is realized on a soft switching system.

After the color ring back tone information is signed, a user, when calling a color ring back tone user, can hear a color ring back tone. The module is not peculiar to the group color ring back tone, a common user needs the signing of the module when becoming a common color ring back tone user so as to hear the color ring back tone.

With the color ring back tone system of the present invention, a user which does not open the common color ring back tone can also join the group color ring back tone smoothly and conveniently, so that it is helpful for the color ring back tone service operators to expand the color ring back tone service and win more customers.

To sum up, the color ring back tone system platform of the present invention supports the group color ring back tone service and is used for processing group color ring back tone information sent by the user, including: performing the group color ring back tone opening according to the opening request, and defaulting the user which requests the opening as the group color ring back tone administrator; a common color ring back tone and a group color ring back tone are directly opened if the user which requests to be a member of the group color ring back tone does not open the common color ring back tone.

The user interacts with the color ring back tone system platform through the manner of the SMS, WEB or IVR.

Next, the processes of opening the group color ring back tone and adding a group color ring back tone member in the present invention will be described specifically in combination with the accompanying drawings.

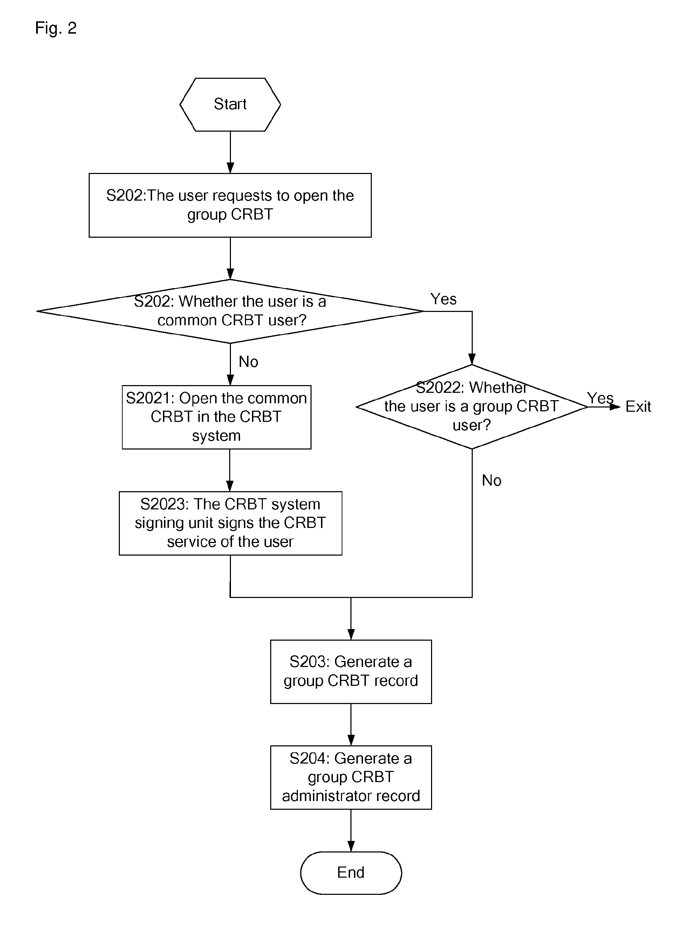

As shown in Fig. 2, the process of opening the group color ring back tone in the present invention comprises the following steps.

Step S201: the user applies to the color ring back tone system platform for the group color ring back tone through the color ring back tone operating platform;
the opening access module can perform opening through the manners of the WEB, the SMS, the IVR and the like; when applying through the WEB, the user applies for the group color ring back tone on the website provided by the operator; when applying through the SMS, the user sends a short message to an access number for application of the group color ring back tone disclosed by the operator so as to apply for opening of the group color ring back tone; and when applying through the IVR, the user directly dials an access number for application of the group color ring back tone disclosed by the operator.

Step S202: after the receiving of the color ring back tone system platform, the color ring back tone mode identification module of the color ring back tone system platform determines whether the user is a color ring back tone user in the network first, the method of the determining is simple, and what is needed is to inquire in the color ring back tone database directly. if the user is a color ring back tone user, step S2022 is performed, otherwise, step S2021 is performed.

Step S2021: if the user is not a color ring back tone user, the group color ring back tone opening management module opens the common color ring back tone first, as the opening of the common color ring back tone is the precondition for the opening of the group color ring back tone. It is simple to open the common color ring back tone in the color ring back tone system, and what is needed is to directly add some default data of the user necessary to the common color ring back tone in the color ring back tone database; only some default data of the user is added in the color ring back tone database, when the number of the user is dialled, the calling user still can not hear the color ring back tone, the group color ring back tone opening management module must send a message to the color ring back tone system signing unit of a switch or a soft Switching System (SS) of the corresponding user and requires to add the signing information of the user in the color ring back tone system signing unit of the switch or the SS, and then step S2023 is performed.

Step S2023: after receiving the message indicating that the user joins the called color ring back tone, the color ring back tone system signing unit signs the color ring back tone information for the user, and then step S203 is performed;
once there is signing information of color ring back tone in the color ring back tone system signing unit, the calling user can hear the color ring back tone that the called user set for the calling user when the number of the user is dialled.

Step S2022: if the user is a color ring back tone user, the color ring back tone mode identification module needs to determine whether the user is a group color ring back tone user; and if the user is a group user, then the opening of the group color ring back tone fails this time, otherwise, step S203 is performed;

Step S203: the group color ring back tone opening management module performs the opening of the group color ring back tone. The group color ring back tone is opened through a very simple method in which a group is generated in the color ring back tone database directly and stored in the database;
in this step, the color ring back tone database initializes some data for the group, such as presenting some group ringtones to the group, and the like.

Step S204: when the group color ring back tone is opened successfully, the user applying for the opening of the group color ring back tone becomes the group color ring back tone administrator automatically; it is recorded in the color ring back tone database that the user is the group administrator of the group, of course, the user is also one of the members of the group.

After the group color ring back tone administrator opens the group color ring back tone successfully, if the group color ring back tone is opened through the manner of the WEB, information prompting that the group color ring back tone administrator opens the group color ring back tone successfully is displayed on the WEB through which the group administrator opens the group color ring back tone. If the group color ring back tone is opened through the IVR, then information that the group administrator opens the group color ring back tone successfully is prompted through a voice. No matter the group administrator opens the group color ring back tone through the SMS or the WEB or the IVR, a short message interface machine system will reply a short message indicating that the group administrator opens the group color ring back tone successfully to the phone user.

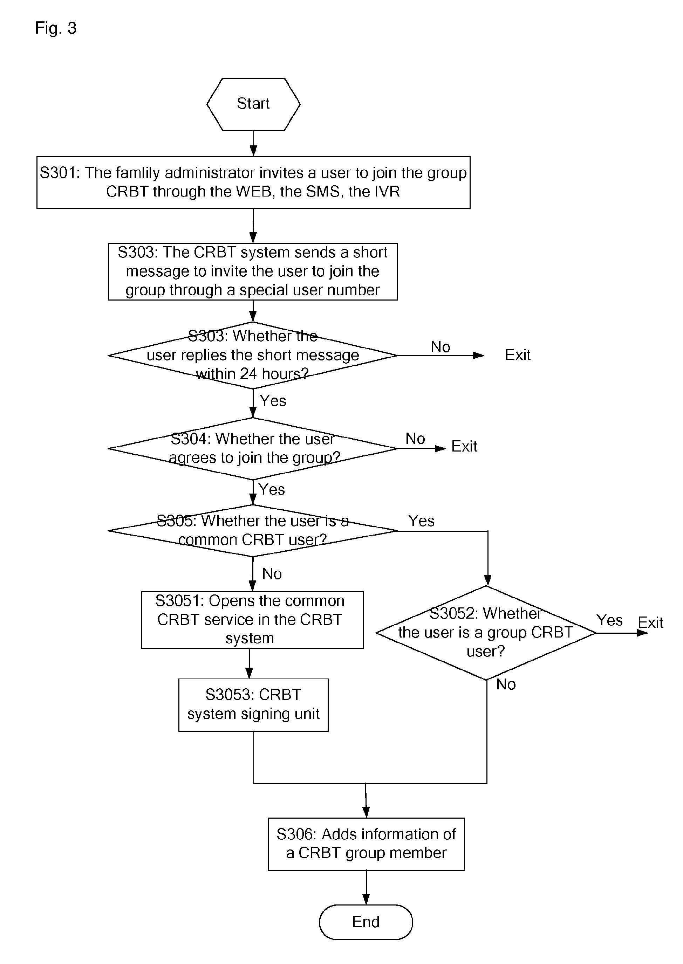

As shown in Fig. 3, the process that the group color ring back tone administrator invites other users to join the group color ring back tone according to the present invention comprises the following steps.

Step S301: the group administrator applies to the group color ring back tone member management module of the color ring back tone system platform for inviting other users to join the group color ring back tone set up by the group administrator through the manner of the WEB, the IVR or the SMS;
if a user is invited through the WEB, then the WEB interface of group color ring back tone member management is entered to invite the user to join. If a user is invited through the IVR, then a specific access number is dialled and the user is invited to join according to the voice prompt. If a user is invited through short messages, then a short message is sent to a specific access number to invite the user to join. The realization method is very simple, which adopts the method of group color ring back tone member pre-adding in which the information of the user which is about to join the group is recorded in the color ring back tone database; the user number, the group number and the like must be recorded in the color ring back tone database information; and the aim of adopting the manner of the WEB, the IVR, the SMS and the like is to provide convenience for users and are different in form but the same in the internal realization mechanism.

Step S302: the group color ring back tone member management module sends a confirmation request to the invited user;
no matter which manner of the WEB, the IVR, the SMS is adopted by the group color ring back tone administrator to send an invitation, after the pre-adding member data of the user which is invited through the manner of the WEB, the IVR or the SMS is recorded in the color ring back tone database, the present invention recommend the manner below to send a confirmation request, namely, triggering a short message interface machine to send a short message to the invited user, and the short message is send with a specific access number.

Step S303: the invited user replies a short message to the specific access number within a predetermined period, such as within 24 hours; if there is no reply, it is considered that the invited user is unwilling to become a member of the group; if the short message is replied within 24 hours, step S304 is performed.

Step S304: if the invited user replies the short message within 24 hours, and the content of the short message is that the user disagrees to join, then the invitation fails; and if the content of the short message is that the user agrees to join, step S305 is performed;
it is very simple to express agreement or disagreement in the short message, which can be set by the operator, for example, if the content of the short message replied to the access number is 1, it indicates agreement, otherwise, it indicates disagreement.

Step S305: the color ring back tone mode identification module inquires the color ring back tone database to determine whether the invited user is a common color ring back tone user, if so, step S3052 is performed, otherwise, step S3051 is performed.

Step S3051: the group color ring back tone member management module opens the common color ring back tone in the color ring back tone database; it is very simple to directly open the common color ring back tone in the color ring back tone database, and what is need is to directly add some default data of the user necessary to the common color ring back tone in the color ring back tone database; only some default data of the user is added in the color ring back tone database, when the number of the user is dialled, the calling user still can not hear the color ring back tone, the group color ring back tone member management module must send a message to the color ring back tone system signing unit of a switch or a soft Switching System (SS) of the corresponding user and requires to add the signing information of the user in the color ring back tone system signing unit of the switch or the SS, and then step S2053 is performed.

Step S2053: after receiving the message indicating that the user joins the called color ring back tone, the color ring back tone system signing unit signs the color ring back tone information for the user, and step S306 is performed;
once there is signing information of the color ring back tone in the color ring back tone system signing unit, the calling user can hear the color ring back tone that the called user set for the calling user when the number of the user is dialled.

Step S3022: if the user is a color ring back tone user, the color ring back tone mode identification module needs to determine whether the user is a group color ring back tone user; if the user is a group user, then inviting the user to join the group color ring back tone fails this time, otherwise, step S306 is performed.

Step S306: the group color ring back tone member management module records the information of the invited user in the group according to the pre-adding member information and deletes the pre-adding member information of the user, thus the user can use the ringtones of the group as well as the ringtone setting of the group; after the user joins the group successfully, the group color ring back tone member management module sends short messages indicating that the user joins the group successfully to the user and the group administrator through a short message interface machine.

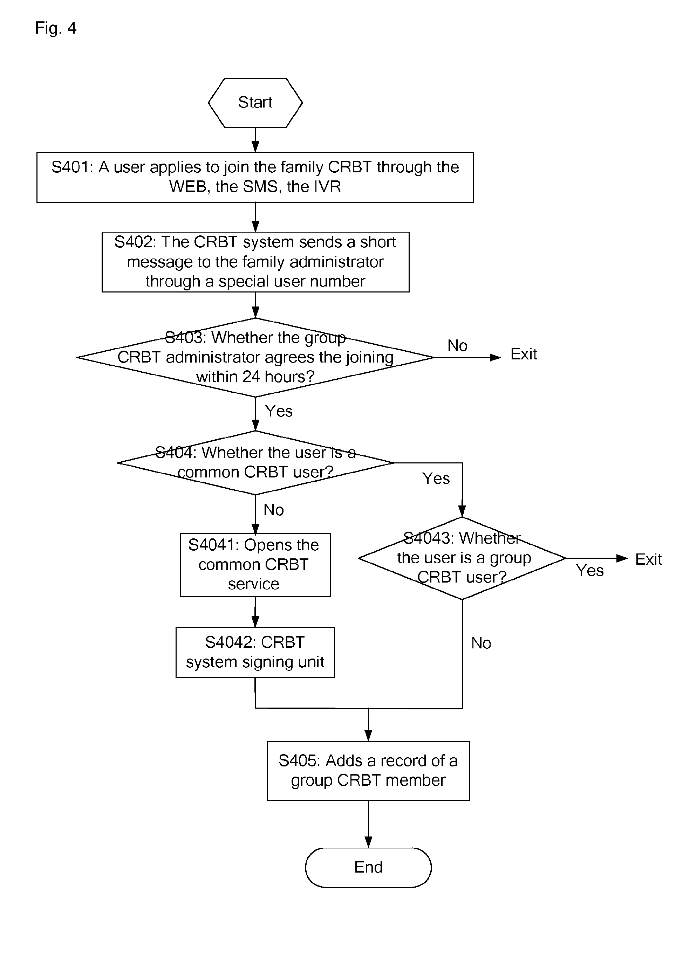

As shown in Fig. 4, the process of that a non group color ring back tone user applies to join the group color ring back tone according to the present invention comprises the following steps.

Step S401: the user which is a non group member applies to the color ring back tone system platform for joining the specific group color ring back tone through the manner of the WEB, the IVR or the SMS and the like;
if the application is performed through the WEB, then the WEB interface of the group color ring back tone member management is entered to select a group to join. If the application is performed through the IVR, then a specific access number is dialled to apply to join a specific group according to the voice prompt. If the application is performed through short messages, then a short message is sent to a specific access number to apply to join the specific group. The specific group is selected from all the groups in the system by the user itself. The realization method is very simple, which also adopts the method of group color ring back tone member pre-adding in which the information of a user which is about to join the group is recorded in the color ring back tone database; the user number, the group number and the like must be recorded in the color ring back tone database information; and the aim of adopting the manner of the WEB, the IVR, the SMS and the like is to provide convenience for users and are different in form but the same in the internal realization mechanism.

Step S402: the group color ring back tone member management module sends a confirmation request to the corresponding group color ring back tone administrator;
no matter which manner of the WEB, the IVR, the SMS is adopted by the non group color ring back tone member, after the pre-adding member data of the user which applies to join is recorded in the database, a short message interface machine is triggered to send a short message to the phone of the group color ring back tone administrator, and the short message also must be sent with a specific access number.

Step S403: the group administrator replies a short message to the specific access number within a predetermined period, such as within 24 hours; if there is no reply, it is considered that the user fails to apply for membership of the group; if the group administrator replies the short message within 24 hours and the content of the short message expresses disagreement, then the user fails to join the group, if agreement is expressed in the content of the short message, then step S404 is performed;
it is very simple to express agreement or disagreement in the short message, which can be set by the operator, for example, if the content of the short message replied to the access number is 1, it indicates agreement, otherwise, it indicates disagreement.

Step S404: the color ring back tone mode identification module inquiries the color ring back tone database to determine whether the user applying for joining is a common color ring back tone user, if so, step S4043 is performed, otherwise, step S4041 is performed.

Step S4041: the group color ring back tone member management module opens the common color ring back tone in the color ring back tone database; it is very simple to directly open the common color ring back tone in the color ring back tone database, and what is need is to directly add some default data of the user necessary to the common color ring back tone in the color ring back tone database; only some default data of the user is added in the color ring back tone database, when the number of the user is dialled, the calling user still can not hear the color ring back tone, the group color ring back tone member management module must send a message to the color ring back tone system signing unit of a switch or a soft Switching System (SS) of the corresponding user and requires to add the signing information of the user in the color ring back tone system signing unit of the switch or the SS, and then step S4042 is performed.

Step S4042: after receiving the message indicating that the user joins the called color ring back tone, the color ring back tone system signing unit signs the color ring back tone information for the user, and step S405 is performed;
once there is signing information of the color ring back tone in the color ring back tone system signing unit, the calling user can hear the color ring back tone that the called user set for the calling user when the number of the user is dialled.

Step S4043: if the user is a color ring back tone user, the color ring back tone mode identification module needs to determine whether the user is a group color ring back tone user; and if the user is a group user, then the user fails to apply to join the group this time, otherwise, step S405 is performed.

Step S405: the group color ring back tone member management module records the information of the user which applies to join the group in the group according to the pre-adding member information and deletes the pre-adding member information of the user, thus the user can use the ringtones of the group as well as the ringtone setting of the group; after the user joins the group successfully, the group color ring back tone member management module sends short messages indicating that the user joins the group successfully to the user and the group administrator through a short message interface machine.

The above are only the preferred embodiments of the present invention and not used to limit the present invention, and to those skilled in the art, various modifications and changes can be made to the present invention. Any modifications, equivalent substitutions and improvements and the like made within the spirit and principle of the present invention should be included within the protection scope of the present invention.

Compared with the prior art, the group color ring back tone service realized by the color ring back tone system platform, the color ring back tone system and the method for realizing the color ring back tone service according to the present invention is the complement to the existing color ring back tone service, thus making the color ring back tone system more convenient to users, and more humanized. By adopting the group color ring back tone opening technology of the present invention, either color ring back tone users or non color ring back tone users can join the group color ring back tone through various manners, such as the SMS and the like; and for the non color ring back tone users, color ring back tone and group color ring back tone can be opened without any letup, thereby providing great convenience for the users. Especially, children and old persons can join the group color ring back tone conveniently to experience beautiful melodies of the group color ring back tone.

## Claims

1. A color ring back tone system, comprising: a color ring back tone operating platform and a color ring back tone system platform which are connected with each other, wherein
the color ring back tone operating platform is arranged to realize group color ring back tone information interaction between a user and the color ring back tone system platform, which comprises: sending a group color ring back tone opening request to the color ring back tone system platform;
the color ring back tone system platform is arranged to process group color ring back tone information sent by the user, which comprises: opening a group color ring back tone according to the opening request, and defaulting the user which requests to open the group color ring back tone as a group color ring back tone administrator; directly opening a common color ring back tone and the group color ring back tone for the user when the user which requests to be a member of the group color ring back tone does not open the common color ring back tone.

2. The system according to claim 1, wherein the color ring back tone system platform comprises a transceiver unit and a processing unit which are connected with each other, wherein
the transceiver unit is arranged to receive the group color ring back tone information sent by the user through the color ring back tone operating platform and send processing result information of the processing unit to the color ring back tone operating platform;
the processing unit further comprises a group color ring back tone opening management module, a color ring back tone mode identification module and a color ring back tone database, wherein
the group color ring back tone opening management module is arranged to process the group color ring back tone opening request, which comprises: notifying the color ring back tone mode identification module to identify a color ring back tone mode of the user to be processed and processing opening of the group color ring back tone according to an identification result of the color ring back tone mode identification module: if the user does not open the color ring back tone, then opening the common color ring back tone, creating an initialization record of the group color ring back tone in the color ring back tone database, and defaulting the user which requests to open the group color ring back tone as the group color ring back tone administrator; if the user has opened the common color ring back tone, then directly creating an initialization record of the group color ring back tone in the color ring back tone database, and defaulting the user which requests to open the group color ring back tone as the group color ring back tone administrator; if the group color ring back tone has been opened, then confirming that the group coloring ring is opened unsuccessfully;
the color ring back tone mode identification module is arranged to inquire the color ring back tone database so as to identify the color ring back tone mode of the user to be processed and notify the group color ring back tone opening module.

3. The system according to claim 1, wherein the processing unit further comprises a group color ring back tone member management module, which is arranged to process a request of adding or deleting of a group color ring back tone member which is proposed by the user; notify, when a member is added, the color ring back tone mode identification module to identify the color ring back tone mode of the user to be processed, and process adding of the group color ring back tone member according to an identification result of the color ring back tone mode identification module; open the common color ring back tone if the user does not open the color ring back tone, and add a member record in a group color ring back tone record of the color ring back tone database; directly add the member record in the group color ring back tone record of the color ring back tone database if the user has opened the common color ring back tone; consider group color ring back tone member management as a failure if the group color ring back tone has been opened;
when the user is the group color ring back tone administrator, the group color ring back tone member management module is further arranged to send a confirmation request to an invited user; and after the confirmation of the invited user, the group color ring back tone member management module notifies the color ring back tone mode identification module to identify the color ring back tone mode;
when the user is not the member of the group color ring back tone, the group color ring back tone member management module is further arranged to send a confirmation request to the group color ring back tone administrator; and after the confirmation of the group color ring back tone administrator, the group color ring back tone member management module notifies the color ring back tone mode identification module to identify the color ring back tone mode.

4. The system according to any of claims 1 to 3, wherein the color ring back tone operating platform consists of a mobile terminal, a WEB interface or an Interactive Voice Response system (IVR), and interacts with the color ring back tone system platform through the manner of a Short Messaging Service (SMS), a WEB or an IVR.

5. A method for realizing color ring back tone service, realized on the basis of a color ring back tone system; and the process of opening a group color ring back tone comprising:
sending, by a user, a group color ring back tone opening application through a color ring back tone operating platform;
receiving the application by a color ring back tone system platform and determining whether the user has opened a common color ring back tone, if not, opening the common color ring back tone, creating an initialization record of the group color ring back tone, and defaulting the user which requests to open the group color ring back tone as a group color ring back tone administrator;
notifying, by the color ring back tone system platform, the user that the group color ring back tone is opened successfully through the color ring back tone operating platform.

6. The method according to claim 5, further comprising:
sending, by the group color ring back tone administrator, a request to the color ring back tone system platform through the color ring back tone operating platform so as to invite other users to join an opened group color ring back tone;
receiving the request by the color ring back tone system platform, and sending to the user a confirmation request of joining the group color ring back tone, and determining whether the user has opened the common color ring back tone after the user confirms to join the group color ring back tone, if not, opening the common color ring back tone for the user, and adding the user, as a member of the group color ring back tone, in a group color ring back tone record.

7. The method according to claim 5, further comprising:
applying to the color ring back tone system platform, by a non group color ring back tone member, for joining the group color ring back tone through the color ring back tone operating platform;
sending, by the color ring back tone system platform, a confirmation request to the group color ring back tone administrator;
sending, by the group color ring back tone administrator, confirmation information to the color ring back tone system platform;
receiving the confirmation information by the color ring back tone system platform, and determining whether the user has opened the common color ring back tone, if not, then opening the common color ring back tone, and adding the user, as a member of the group color ring back tone, in the group color ring back tone record.

8. The method according to any of claims 5 to 7, wherein the color ring back tone operating platform interacts with the color ring back tone system platform through the manner of an SMS, a WEB interface or an IVR, and the color ring back tone operating platform is realized on a mobile terminal or a WEB.
